# EUROPEAN PATENT APPLICATION

(11) **EP 4 631 901 A1**
(43) Date of publication of application: **15.10.2025**
(21) Application number: 25161261.0
(22) Date of filing: 03.03.2025
(51) Int. Cl.: B66B 5/02, B66B 5/00

(54) **EARTHQUAKE PORTFOLIO MANAGEMENT**

(30) Priority: 10.04.2024 US 202418631906
(71) Applicant: Otis Elevator Company, Farmington, Connecticut 06032 (US)
(72) Inventor: Rao, Sanjithraj, Farmington, 06032 (US); Kim, DuEon, 07326 Incheon (KR); Schiappa, Michael, Farmington, 06032 (US); Shindo, Ryo, Sanbu-gun, 289-1693 (JP)
(74) Representative: Winter, Brandl - Partnerschaft mbB

(57) **Abstract**

A method of portfolio management for multiple elevator systems. The method being executable for when an incident occurs includes receiving elevator system information from the edge IoT devices of the elevator systems affected by the incident, analyzing the elevator system information to determine how to triage the elevator systems affected by the incident, generating an output in accordance with results of the analyzing, pushing the output to an application layer using application program interfaces (APIs) to provide operators with first status information in real-time, and sending the output to the operators via communication notification protocols to provide the operators with second status information in real-time.

## Description

### BACKGROUND

The present disclosure relates to elevator systems and, in particular, to a system for earthquake portfolio management that incorporates many elevator systems.

In an elevator system, an elevator shaft is built into a building and an elevator car travels up and down along the elevator shaft to arrive at landing doors of different floors of the building. The movement of the elevator is driven by a machine that is controlled by a controller according to instructions received from users of the elevator system. An elevator system is often managed by a building operator and/or a third party. The building operator and/or the third party are typically responsible for general upkeep and maintenance and repair as well as daily monitoring to insure continued operational conditions. In some cases, the building operator and/or the third party manage multiple elevator systems.

In regions where earthquakes are common, elevator control systems are equipped with earthquake sensors. In most modern elevator systems, elevators will be automatically placed in some form of earthquake operation (EQO) mode when an earthquake sensor is activated. The elevator systems are then triaged by the building operator and/or the third party who is responsible for managing the elevator systems to identify and address problems before they can resume normal operations. The triaging process can lead to downtime and outages and does not always provide needed insights to the correct people at the correct times.

### SUMMARY

According to an aspect of the disclosure, a method of portfolio management for multiple elevator systems. The method being executable for when an incident occurs includes receiving elevator system information from the edge IoT devices of the elevator systems affected by the incident, analyzing the elevator system information to determine how to triage the elevator systems affected by the incident, generating an output in accordance with results of the analyzing, pushing the output to an application layer using application program interfaces (APIs) to provide operators with first status information in real-time, and sending the output to the operators via communication notification protocols to provide the operators with second status information in real-time.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:

FIG. 1 is a perspective view of an elevator system in accordance with embodiments;

FIG. 2 is a flow diagram illustrating a method of portfolio management for multiple elevator systems in accordance with embodiments;

FIG. 3A is a schematic illustration of a system of portfolio management for multiple elevator systems in accordance with embodiments;

FIG. 3B is a table graphically illustrating data collected by the system of FIG. 3A in accordance with embodiments;

FIG. 3C is a flow diagram illustrating a method of operation of the system of FIG. 3A in accordance with embodiments;

FIG. 4 is a schematic diagram illustrating a cloud-based data analytics rules engine of a system of portfolio management for multiple elevator systems in accordance with embodiments;

FIG. 5 are exemplary screen-shots of portals of the system of portfolio management for multiple elevator systems of FIGS. 3A and 3B and FIG. 4 in accordance with embodiments; and

FIG. 6 is a schematic illustration of an updated text message in accordance with embodiments.

### DETAILED DESCRIPTION

In regions where earthquakes are common, elevator control systems are equipped with earthquake sensors. In most modern elevator systems, elevators will be automatically placed in some form of earthquake operation when an earthquake sensor is activated. The elevator systems are then triaged to identify and address problems before they can resume normal operations. The triaging process can lead to downtime and outages and does not always provide needed insights to the correct people at the correct times.

Thus, as will be described below, a system and method are provided for quickly triaging all units in an elevator systems portfolio.

An edge internet of things (IoT) device is equipped on each elevator system of a portfolio in order to properly monitor the status of the corresponding elevators. The IoT edge device collects elevator system status information and sends it to the cloud on set intervals or in response to a trigger, such as an earthquake. Elevator system status information will include, but not be limited to, landing information, motion logic state information, door position information (close, closing, open, opening, fully open) and elevator mode information. The elevator system status information enters the cloud and is process and analyzed in real-time. The processing can be performed using a data analytics rule engine that resides in the cloud. An outcome of the analytics can be provided to various user applications, such as expert portals and mobile handheld devices. The outcome can also be pushed to communication notification protocols for email and text messaging. The user applications and notifications can be specifically designed for several different personas. The different personas include, but are not limited to, engineering field support teams, elevator mechanics, building owners, property manages, call centers and supervisors. Each associated portal and mobile device is designed specifically to fit their specified role and responsibilities.

When an earthquake takes place and a given elevator's earthquake sensor is active a chain of events will take place. The elevator system status will transition from a running mode into earthquake operation. The IoT edge device will report the latest status and send the earthquake mode status to the cloud. The data analytics rule engine will process the latest status data and the outcome will be recorded and then pushed to the application layer using APIs. The APIs allows all relevant persons (i.e., managers, mechanics, building owners and operators, tenants, etc.) to get the earthquake status concurrently and in real-time.

Once the earthquake status is issued, field operation support personas have the proper information to triage the situation. The exact number of elevators affected and location of each elevator in the earthquake operation (EQO) mode, the location of each elevator service mechanic, passenger entrapments and the type of building such as hospitals, office building, apartments, etc. The real-time update status and the output from the data analytics rules greatly reduce the triage duration. Mechanics are dispatched to address the highest priority elevators based on safety standards and based on business and other types of requirements. As mechanics are dispatched and elevators are put back into operation, the portals and mobile device are updated and text messages and emails are all issued in real-time.

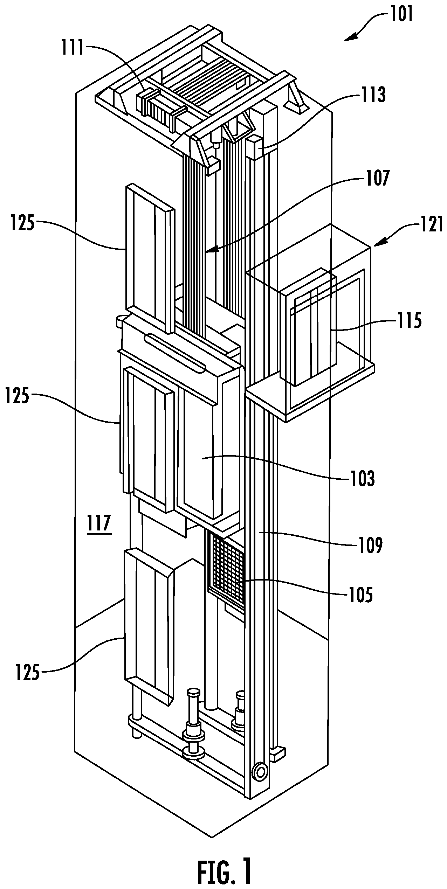

With reference to FIG. 1, which is a perspective view of an elevator system 101, the elevator system 101 includes an elevator car 103, a counterweight 105, a tension member 107, a guide rail 109, a machine 111, a position reference system 113 and a controller 115. The elevator car 103 and the counterweight 105 are connected to each other by the tension member 107. The tension member 107 may include or be configured as, for example, ropes, steel cables and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counterweight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the elevator shaft or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller 115 may be located remotely or in a distributed computing network (e.g., cloud computing architecture). The controller 115 may be implemented using a processor-based machine, such as a personal computer, server, distributed computing network, etc.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

The elevator system 101 also includes one or more elevator doors 104. The elevator door 104 may be integrally attached to the elevator car 103 or the elevator door 104 may be located on a landing 125 of the elevator system 101, or both. Embodiments disclosed herein may be applicable to both an elevator door 104 integrally attached to the elevator car 103 or an elevator door 104 located on a landing 125 of the elevator system 101, or both. The elevator door 104 opens to allow passengers to enter and exit the elevator car 103.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

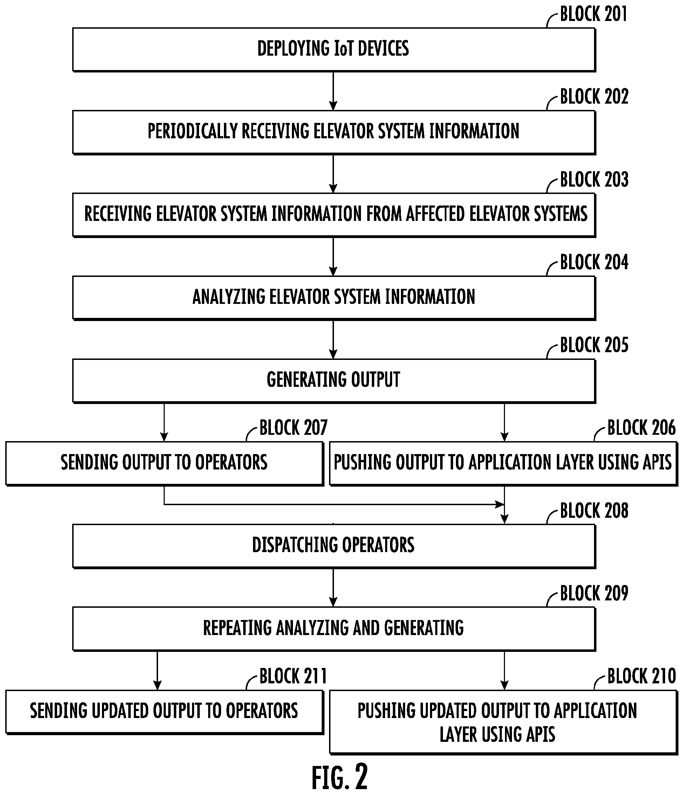

With continued reference to FIG. 1 and with additional reference to FIG. 2, a method 200 of portfolio management for multiple elevator systems, such as the elevator system 101 of FIG. 1, is provided. The method 200 includes initially deploying edge IoT devices throughout the multiple elevator systems (block 201) with each edge IoT device being configured to sense that, when an incident occurs, the corresponding elevator systems affected by the incident transition to an incident operation mode. As used herein, the incident can be any incident that might affect an elevator system, such as an earthquake, a weather event, a tsunami, a fire, etc. The following description will relate, however, to the case of the incident being an earthquake and the incident operation mode being an earthquake operation (EQO) mode. This is being done for clarity and brevity and is not intended to otherwise limit the scope of the description or the following claims.

As shown in FIG. 1, the method 200 includes receiving elevator system information periodically from each of the edge IoT devices (block 202), receiving elevator system information from the edge IoT devices of the elevator systems affected by the earthquake (block 203) and analyzing the elevator system information to determine how to triage the elevator systems affected by the earthquake (block 204), where the analyzing of the elevator system information includes collecting elevator system information from each of the edge IOT devices for various dates and for various times during those dates. The method 200 also includes generating an output in accordance with results of the analyzing (block 205), where the generating of the output includes generating the output based on the elevator system information for the various dates and for the various times during those dates. The method 200 also includes pushing the output to an application layer using application program interfaces (APIs) to provide operators with first status information in real-time (block 206) and sending the output to the operators via communication notification protocols to provide the operators with second status information in real-time (block 207). Regarding the pushing of the output of block 206 and the sending of the output of block 207, this effective redundancy is provided to allow for a greater number of the operators to be assuredly apprised of the situation, especially in cases in which one or more operators are traveling and may not have access to certain communication devices.

In accordance with embodiments, the method 200 can also include dispatching the operators to service the elevator systems affected by the incident (block 208), repeating the analyzing of the elevator system information and the generating of the output to generate an updated output (block 209), pushing the updated output to the application layer using the APIs to provide the operators with updated first status information in real-time (block 210) and sending the updated output to the operators via the communication notification protocols to provide the operators with updated second status information in real-time (block 211).

The elevator system information that is received periodically from each of the edge IoT devices of block 201 and the elevator system information received from the edge IoT devices of the elevator systems affected by the incident of block 202 can include, but is not limited to, landing information, motion logic state information, door position information (close, closing, open, opening, fully open) and elevator mode information. The analyzing of the elevator system information of block 204 and the generating of the output of block 205 can be executed in a cloud computing environment. In particular, the analyzing of the elevator system information can be executed by a cloud-based data analytics rules engine. The output can include, but is not limited to, a number of elevator systems affected, a location of each elevator system in the EQO mode, a location of each elevator service mechanic, information relating to passenger entrapments and information relating to building types where each elevator system resides.

In accordance with embodiments, the APIs can include, but are not limited to, APIs of expert portals and APIs of mobile handheld devices and the communication notification protocols can be communication protocols for email and text messaging. In some cases, text messages by which the output is sent to the operators can be updateable in real-time. In particular, unread text messages can be updateable in real-time. In this way, an operator who does not immediately read a text message might not be immediately aware of a given situation. Later, when the operator looks at his text messages, the given situation may have changed or become resolved. In this instance, if the operator were to have received two text messages (the first to alert the operator as to the given situation, and the second to alert the operator as to the change or the resolution of the given situation), the operator could be confused. Instead, if the first text message to alert the operator as to the given situation were updated in real-time to alert the operator as to the change or the resolution of the given situation prior to the operator reading the first text message, when the operator does finally look at his text messages, the operator will immediately be alerted by only a single text message to the fact that the given situation occurred and changed or was resolved.

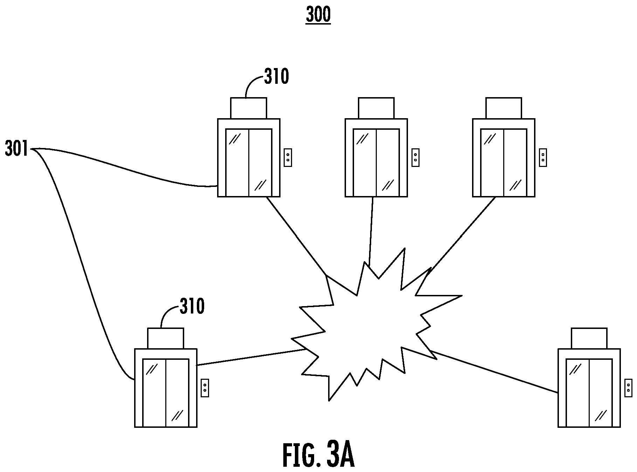

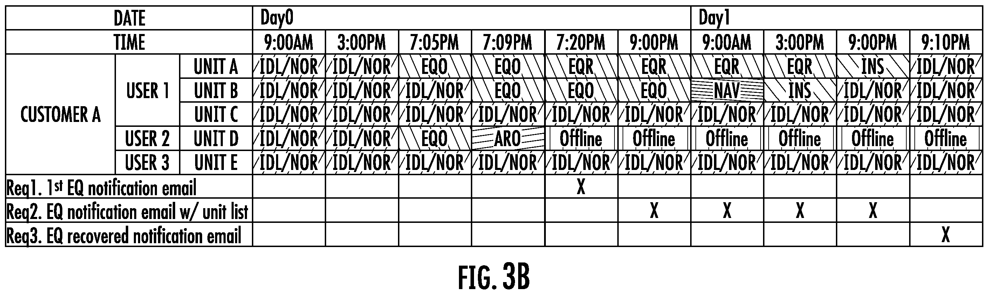

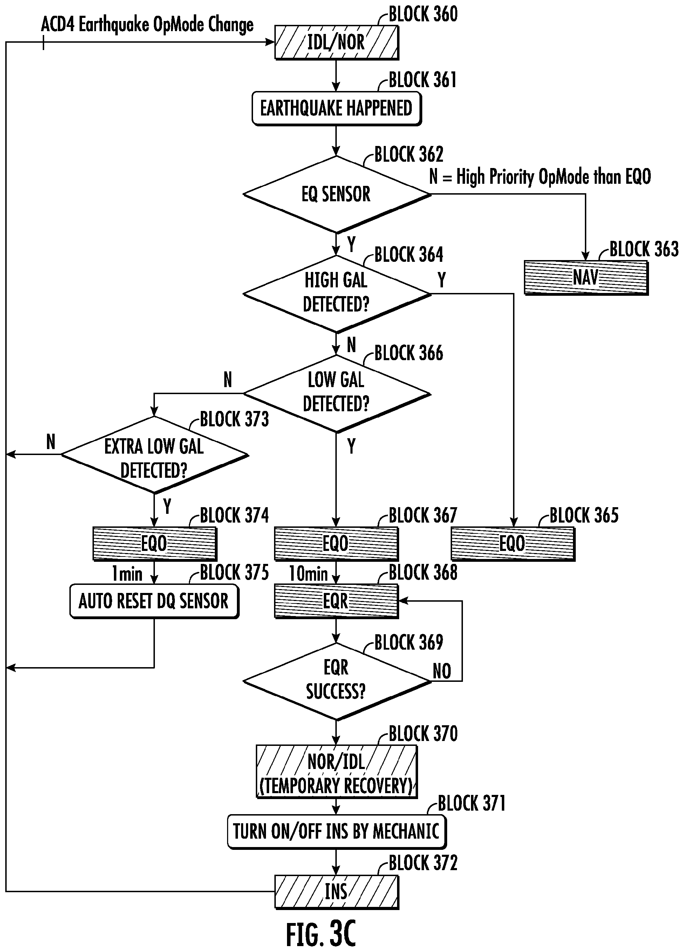

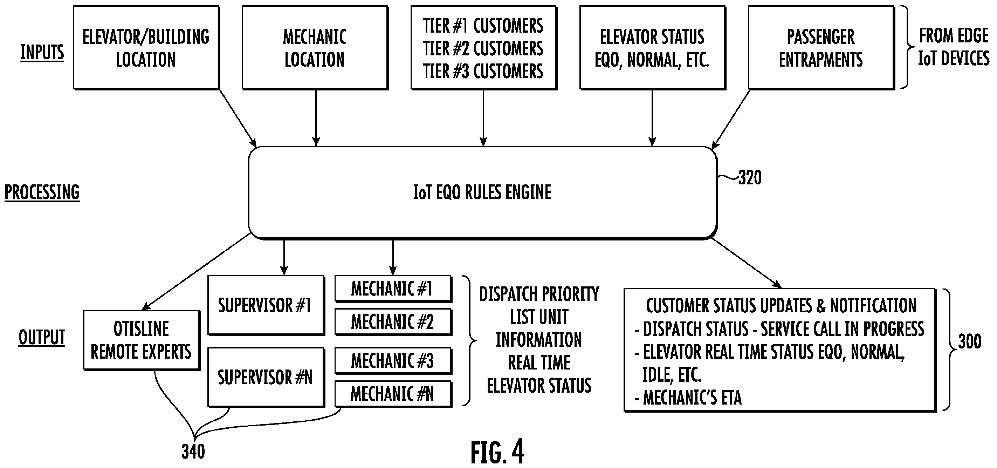

With reference to FIGS. 3A, 3B and 3C and with reference to FIG. 4, a portfolio management system 300 is provided for managing a portfolio of multiple elevator systems 301. The portfolio management system 300 includes edge internet of things (IoT) devices 310 deployed throughout each of the multiple elevator systems 301. The edge IoT devices 310 are configured to sense multiple characteristics or properties of the corresponding elevator systems 301, especially when the corresponding elevator system 301 is affected by an earthquake (i.e., an incident) and thus transitions to an EQO mode (i.e., an incident operation mode). The portfolio management system 300 further includes a cloud-based data analytics rules engine 320 (see FIG. 4), which is periodically receptive of elevator system information from the edge IoT devices 310 of each of the elevator systems 301 and which is receptive of elevator system information from elevator systems 301 that are affected by the earthquake. The elevator system information can include, but is not limited to, landing information, motion logic state information, door position information (close, closing, open, opening, fully open) and elevator mode information.

The cloud-based data analytics rules engine 320 is configured to analyze the elevator system information to determine how to triage the elevator systems 301 that are affected by the earthquake, generate an output in accordance with results of the analyzing, push the output to an application layer 330 using application program interfaces (APIs) to provide operators with first status information in real-time and send the output to the operators 340 via communication notification protocols to provide the operators with second status information in real-time. The output can include, but is not limited to, a number of elevator systems affected, a location of each elevator system in the EQO mode, a location of each elevator service mechanic, information relating to passenger entrapments and information relating to building types where each elevator system resides. Regarding the pushing of the output and the sending of the output by the cloud-based data analytics rules engine 320, this effective redundancy is provided to allow for a greater number of the operators to be assuredly apprised of the situation, especially in cases in which one or more operators are traveling and may not have access to certain communication devices.

In accordance with embodiments, the cloud-based data analytics rules engine 320 is further configured to dispatch the operators to service the elevator systems affected by the earthquake, to repeat the analyzing of the elevator system information and the generating of the output to generate an updated output, to push the updated output to the application layer using the APIs to provide the operators with updated first status information in real-time and to send the updated output to the operators via the communication notification protocols to provide the operators with updated second status information in real-time.

In an exemplary case, as shown in FIG. 3B, the elevator system information collected by the edge IoT devices 310 for the cloud-based data analytics rules engine 320 includes data that identifies conditions of units (i.e., elevator systems or elevator cars) at various dates and at various times during those dates. These conditions include, but are not limited to, various operational mode such as idle (IDL), normal (NOR), earthquake operation (EQO), earthquake recovery (EQR), inspection (INS), auto rescue operation (ARO) and not available (NAV).

As shown in FIG. 3C, an operation of the elevator system 301 is illustrated and begins with an idle or normal reading at block 360. At block 361, an earthquake happens and at block 362 a reading is taken from corresponding edge IOT devices 310. If that reading indicates that a higher priority operation than EQO has occurred, such as an "emergency stop", the elevator system 301 immediately goes into shutdown with priority definition being programmed in elevator controller software and the NAV condition at block 363.

At block 364, it is determined whether the reading of the edge IOT device 310 is indicative of a high GAL being detected (GAL is a unit of acceleration to measure earthquake intensity; 1 GAL = 1 cm/sec/sec and a high/low/extra GAL value can be set differently by a building height, sensor location, etc.). If the high GAL is detected, the elevator system 301 goes into EQO mode at block 365. At block 366, if the high GAL is not detected, it is determined whether the reading of the edge IOT device 310 is indicative of a low GAL being detected and, if the high GAL is detected, the elevator system 301 goes into EQO mode for a predefined period of time (i.e., 10 minutes) at block 367 which is followed by the elevator system 301 going into EQR mode at block 368. This is followed by the elevator system 301 determining whether EQR success is achieved at block 369 and, if so, the elevator system 301 going into NOR/IDL mode at block 370. This is followed by an operator turning INS mode on/off at block 371, the elevator system 301 going into INS mode at block 372 and then returning to the IDL/NOR mode. At block 373, if the low GAL is not detected, it is determined whether the reading of the edge IOT device 310 is indicative of an extra low GAL being detected. If not, the elevator system 301 returns to the IDL/NOR mode. If so, the elevator system 301 goes into EQO mode for a predefined period of time (i.e., 10 minutes) at block 374 with an automatic reset of the edge IOT device 310 at block 375 which is followed by the elevator system 301 returning to the IDL/NOR mode.

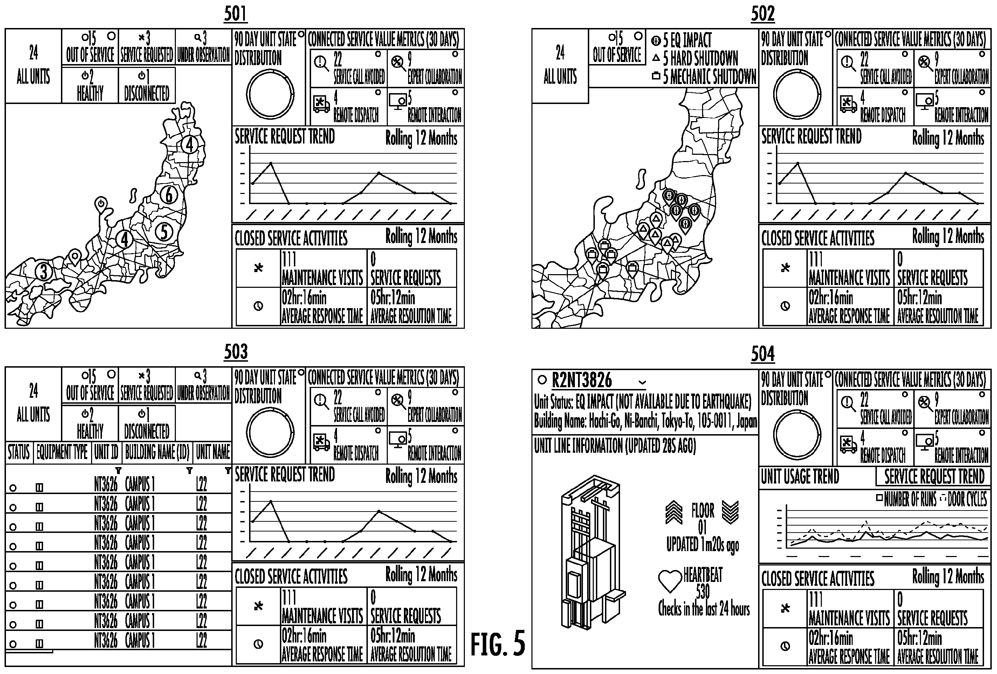

With continued reference to FIG. 4 and with additional reference to FIG. 5 and in accordance with embodiments, the APIs can include, but are not limited to, APIs of expert portals and handheld devices that can provide various user interface screens 501, 502, 503 and 504 for example. Each of the user interface screens 501, 502, 503 and 504 provides operators with multiple types of information including, but not limited to, locations of elevator systems that have been affects by the earthquake, a real-time status of those elevator systems, a dispatch situation for each of those elevator systems, etc. The communication notification protocols can be communication protocols for email and text messaging.

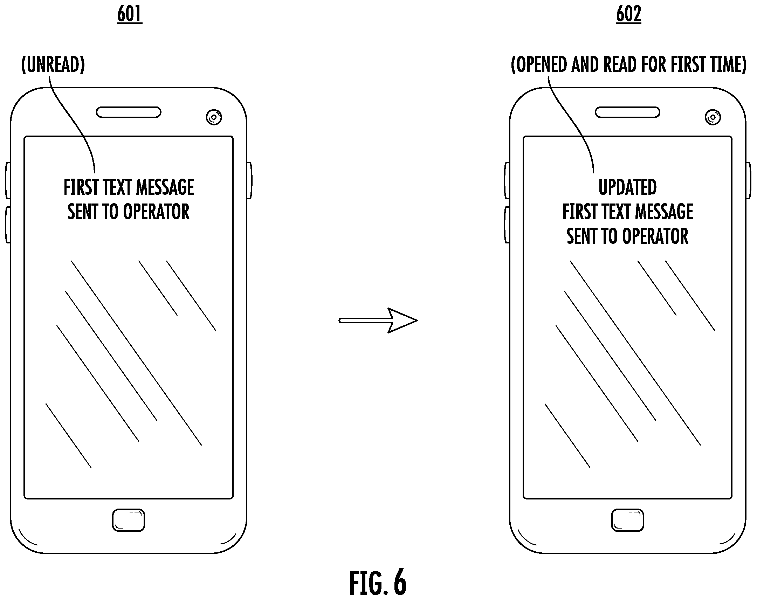

With reference to FIG. 6, in some cases, text messages by which the output is sent to the operators can be updateable in real-time. In particular, unread text messages can be updateable in real-time. In this way, an operator who does not immediately read a text message might not be immediately aware of a given situation. Later, when the operator looks at his text messages, the given situation may have changed or become resolved. In this instance, if the operator were to have received two text messages (the first to alert the operator as to the given situation, and the second to alert the operator as to the change or the resolution of the given situation), the operator could be confused. Instead, as shown in FIG. 6, if the first text message 601 to alert the operator as to the given situation were updated in real-time to become an updated first text message 602 to alert the operator as to the change or the resolution of the given situation prior to the operator reading the first text message, when the operator does finally look at his text messages, the operator will immediately be alerted by only a single text message (i.e., the updated first text message 602) to the fact that the given situation occurred and changed or was resolved.

Technical effects and benefits of the present disclosure are the provision of a system and method for earthquake portfolio management. When an earthquake occurs, affected elevators will be automatically placed in earthquake operation (EQO) mode and thus be essentially out of service for the riding public until the corresponding earthquake sensors are cleared allowing the elevators to be placed back into service. A triage process to accomplish this is automated.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A method of portfolio management for multiple elevator systems throughout which edge internet of things (IoT) devices are deployed, the method being executable for when an incident occurs and elevator systems affected by the incident transition to an incident operation mode and comprising:
receiving elevator system information from the edge IoT devices of the elevator systems affected by the incident;
analyzing the elevator system information to determine how to triage the elevator systems affected by the incident;
generating an output in accordance with results of the analyzing;
pushing the output to an application layer using application program interfaces (APIs) to provide operators with first status information in real-time; and
sending the output to the operators via communication notification protocols to provide the operators with second status information in real-time.

2. The method according to claim 1, wherein the incident is an earthquake and the incident operation mode is an earthquake operation (EQO) mode, or the method further comprising receiving elevator system information periodically from each of the edge IoT devices,
wherein the elevator system information received periodically from each of the edge IoT devices and the elevator system information received from the edge IoT devices of the elevator systems affected by the incident comprises landing information, motion logic state information, door position information (close, closing, open, opening, fully open) and elevator mode information.

3. The method according to claim 1, wherein:
the analyzing of the elevator system information and the generating of the output are executed in a cloud computing environment, and
the analyzing of the elevator system information comprises collecting elevator system information from each of the edge IOT devices for various dates and for various times during those dates and the generating of the output comprises generating the output based on the elevator system information for the various dates and for the various times during those dates.

4. The method according to claim 1, wherein the output comprises a number of elevator systems affected, a location of each elevator system in the incident operation mode, a location of each elevator service mechanic, information relating to passenger entrapments and information relating to building types where each elevator system resides.

5. The method according to claim 1, wherein the APIs comprise APIs of expert portals and APIs of mobile handheld devices and the communication notification protocols are for email and text messaging, preferably wherein text messages by which the output is sent to the operators are updateable in real-time.

6. The method according to claim 1, further comprising:
dispatching the operators to service the elevator systems affected by the incident;
repeating the analyzing of the elevator system information and the generating of the output to generate an updated output;
pushing the updated output to the application layer using the APIs to provide operators with updated first status information in real-time; and
sending the updated output to the operators via the communication notification protocols to provide the operators with updated second status information in real-time.

7. A method of earthquake portfolio management for multiple elevator systems throughout which edge internet of things (IoT) devices are deployed when an earthquake occurs and elevator systems affected by the earthquake transition to an earthquake operation (EQO) mode, the method comprising:
receiving elevator system information from the edge IoT devices of the elevator systems affected by the earthquake at a cloud-based data analytics rules engine;
analyzing, at the cloud-based data analytics rules engine, the elevator system information to determine how to triage the elevator systems affected by the earthquake;
generating, at the cloud-based data analytics rules engine, an output in accordance with results of the analyzing;
pushing the output to an application layer using application program interfaces (APIs) to provide operators with first status information in real-time; and
sending the output to the operators via communication notification protocols to provide the operators with second status information in real-time.

8. The method according to claim 7, further comprising receiving elevator system information periodically from each of the edge IoT devices,
wherein the elevator system information received periodically from each of the edge IoT devices and the elevator system information received from the edge IoT devices of the elevator systems affected by the incident comprises landing information, motion logic state information, door position information (close, closing, open, opening, fully open) and elevator mode information.

9. The method according to claim 7, wherein the output comprises a number of elevator systems affected, a location of each elevator system in the incident operation mode, a location of each elevator service mechanic, information relating to passenger entrapments and information relating to building types where each elevator system resides.

10. The method according to claim 7, wherein the APIs comprise APIs of expert portals and APIs of mobile handheld devices and the communication notification protocols are for email and text messaging, preferably wherein text messages by which the output is sent to the operators are updateable in real-time.

11. The method according to claim 7, further comprising:
dispatching the operators to service the elevator systems affected by the incident;
repeating the analyzing of the elevator system information and the generating of the output to generate an updated output;
pushing the updated output to the application layer using the APIs to provide operators with updated first status information in real-time; and
sending the updated output to the operators via the communication notification protocols to provide the operators with updated second status information in real-time

12. A portfolio management system for multiple elevator systems, the portfolio management system comprising:
edge internet of things (IoT) devices deployed throughout the multiple elevator systems, the edge IoT devices being configured to sense that elevator systems affected by an incident transition to an incident operation mode; and
a cloud-based data analytics rules engine receptive of elevator system information from the edge IoT devices of the elevator systems affected by the incident, the cloud-based data analytics rules engine being configured to:
analyze the elevator system information to determine how to triage the elevator systems affected by the incident,
generate an output in accordance with results of the analyzing,
push the output to an application layer using application program interfaces (APIs) to provide operators with first status information in real-time, and
send the output to the operators via communication notification protocols to provide operators with second status information in real-time.

13. The portfolio management system according to claim 12, wherein the incident is an earthquake and the incident operation mode is an earthquake operation (EQO) mode, or wherein:
the cloud-based data analytics rules engine is receptive of elevator system information periodically from each of the edge IoT devices, and
the elevator system information received periodically from each of the edge IoT devices and the elevator system information received from the edge IoT devices of the elevator systems affected by the incident comprises landing information, motion logic state information, door position information (close, closing, open, opening, fully open) and elevator mode information.

14. The portfolio management system according to claim 12, wherein the APIs comprise APIs of expert portals, APIs of mobile handheld devices and the communication notification protocols are for email and text messaging, preferably wherein text messages by which the output is sent to the operators are updateable in real-time.

15. The portfolio management system according to claim 12, wherein the cloud-based data analytics rules engine is further configured to:
dispatch the operators to service the elevator systems affected by the incident,
repeat analysis of the elevator system information and generation of the output to generate an updated output,
push the updated output to the application layer using the APIs to provide the operators with updated first status information in real-time, and
send the updated output to the operators via the communication notification protocols to provide the operators with updated second status information in real-time.
